# EUROPEAN PATENT APPLICATION

(11) **EP 4 039 138 A1**
(43) Date of publication of application: **10.08.2022**
(21) Application number: 20885111.3
(22) Date of filing: 04.11.2020
(51) Int. Cl.: A47J 27/00, A47J 36/24, A47J 37/00

(54) **CONTROL METHOD, COOKING APPLIANCE, AND STORAGE MEDIUM**

(30) Priority: 05.11.2019 CN 201911070283
(71) Applicant: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: HE, Dandan, Foshan, Guangdong 528311 (CN); HAN, Jie, Foshan, Guangdong 528311 (CN); FANG, Zhen, Foshan, Guangdong 528311 (CN); YAO, Ping, Foshan, Guangdong 528311 (CN); WANG, Jinhua, Foshan, Guangdong 528311 (CN); ZHU, Jianhao, Foshan, Guangdong 528311 (CN)
(74) Representative: Whitlock, Holly Elizabeth Ann
(86) International application number: PCT/CN2020/126563
(87) International publication number: WO 2021/088887

(57) **Abstract**

A control method, a cooking appliance (100), and a storage medium. The cooking appliance (100) comprises a heating part (102) for heating cookware. The control method comprises: a preheating stage: controlling the heating part (102) to heat the cookware so that the temperature of the cookware is within a first temperature range; and a shape locking and cooking stage: controlling, according to cooking parameters of ingredient shape locking and cooking, the heating part (102) to heat the cookware so that the temperature of the inner surface of the cookware is within a second temperature range for a preset duration.

## Description

### CROSS-REFERENCE TO RELATED APPLICATIONS

The present application claims priority to and the benefit of Chinese Patent Application No. 201911070283.6, filed with China National Intellectual Property Administration on November 05, 2019, the entire disclosure of which is incorporated herein by reference.

### TECHNICAL FIELD

The present disclosure relates to the field of household appliance technologies, and more particularly, to a control method, a cooking appliance, and a storage medium.

### BACKGROUND

A gas stove is a stove commonly used by many families at present. It has the advantages of large flame adjusting range and high heat transfer efficiency and the like, which are in line with people's cooking habits. With the advancement of science and technology and the upgrading of consumption, the intelligentization of cookware has become the current and future development trend. However, cooking of fried steak-type food such as steak and pork chops as a new function is not popularized and used in intelligent gas stove products.

### SUMMARY

Embodiments of the present disclosure provide a control method, a cooking appliance, and a storage medium.

An embodiment of the present disclosure provides a control method applied in a cooking appliance including a heating part configured to heat cookware, and the control method including: a preheating stage of controlling the heating part to heat the cookware in such a manner that a temperature of the cookware is within a first temperature range; and a shape locking and cooking stage of controlling, based on cooking parameters of ingredient shape locking and cooking, the heating part to heat the cookware in such a manner that a temperature of an inner surface of the cookware is within a second temperature range for a preset time duration.

According to the control method of the embodiment of the present disclosure, firstly the temperature of the cookware is within the first temperature range, to achieve a purpose of preheating the cookware, then the heating part is controlled to heat based on the cooking parameters of ingredient shape locking and cooking, so that the shape locking and cooking stage of food in the cookware can be synchronously completed during cooking to achieve intelligent cooking of steak-type food.

In some embodiments, the control method includes controlling, when the temperature of the cookware is within the first temperature range, the cooking appliance to issue a put-into-cooker indication.

Therefore, it can indicate the user to put the food into the cooker in time.

In some embodiments, the control method includes: after the put-into-cooker indication is issued, controlling, in response to determining that no food is in the cookware based on the temperature of the cookware, the heating part to be turned off.

Therefore, the heating part can be turned off in response to determining that no food is put into the cookware, to avoid a condition that the cookware is dry-burned.

In some embodiments, the cookware includes a single heating surface, the control method includes: controlling the heating part to heat the single heating surface in the shape locking and cooking stage.

Therefore, when the steak-type food is cooked by using the cookware with the single heating surface, the shape locking and cooking stage of the steak-type food can be synchronously completed during cooking, so that only one-time auxiliary turn-over is needed.

In some embodiments, the shape locking and cooking stage includes a first-surface shape locking and cooking stage and a second-surface shape locking and cooking stage, and the control method includes: controlling the cooking appliance to issue a turn-over indication after the first-surface shape locking and cooking stage is completed and before the second-surface shape locking and cooking stage is executed.

Therefore, the cooking of two sides of the steak-type food is completed through two shape locking and cooking stages.

In some embodiments, the control method includes: after the turn-over indication is issued, controlling, in response to determining that the food in the cookware is not turned over based on the temperature of the cookware, the heating part to be turned off.

Therefore, one side of the food can be prevented from being burnt out.

In some embodiments, the control method includes: acquiring at least one of a thickness and a doneness of the food; and determining the cooking parameters of ingredient shape locking and cooking based on at least one of the thickness and the doneness of the food.

Therefore, the cooking can be carried out based on at least one of the thickness and the doneness of the food, to meet more cooking requirements of the user.

In some embodiments, the control method includes: when the shape locking and cooking stage is completed, controlling the heating part to be turned off and controlling the cooking appliance to issue a completion indication.

Therefore, the user can be informed of the completion of cooking in time, so that the user can conveniently perform subsequent processing.

An embodiment of the present disclosure provides a cooking appliance including a controller and a heating part configured to heat cookware, the controller is connected to the heating part and configured to implement steps of the control method of any one of the above embodiments.

According to the cooking appliance provided by the embodiment of the present disclosure, firstly the temperature of the cookware is within first temperature range, to achieve a purpose of preheating the cookware, then the heating part is then controlled to be heated based on the cooking parameters of ingredient shape locking and cooking, so that the shape locking and cooking stage of the food in the cookware can be synchronously completed during cooking, to achieve the intelligent cooking of the steak-type food.

An embodiment of the present disclosure provides a computer-readable storage medium, having a computer program stored thereon, the computer program, when executed by a processor, implements steps of the control method of any one of the above embodiments.

According to the computer-readable storage medium provided by the embodiment of the present disclosure, firstly the temperature of the cookware is within first temperature range, to achieve a purpose of preheating the cookware, then the heating part is controlled to be heated based on the cooking parameters of ingredient shape locking and cooking, so that the shape locking and cooking stage of the food in the cookware can be synchronously completed during cooking, to achieve the intelligent cooking of the steak-type food.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF DRAWINGS

These and other aspects and advantages of embodiments of the present disclosure will become apparent and more readily appreciated from the following descriptions made with reference to the accompanying drawings, in which:
FIG. 1 is a schematic flow chart of a control method according to an embodiment of the present disclosure;
FIG. 2 is a schematic block diagram of a cooking appliance according to an embodiment of the present disclosure;
FIG. 3 is a schematic structural view of a cooking appliance according to an embodiment of the present disclosure;
FIG. 4 is another schematic block diagram of a cooking appliance according to an embodiment of the present disclosure;
FIG. 5 is another schematic flow chart of a control method according to an embodiment of the present disclosure; and
FIG. 6 is still schematic flow chart of a control method according to the embodiment of the present disclosure.

### DESCRIPTION OF EMBODIMENTS

The following describes in detail the embodiments of the present application, the embodiments of which are illustrated in the accompanying drawings, wherein like reference numerals refer to the same or similar elements or elements having the same or similar functions throughout. The embodiments described below with reference to the accompanying drawings are exemplary only for explaining the present disclosure and are not to be construed as limiting the present disclosure.

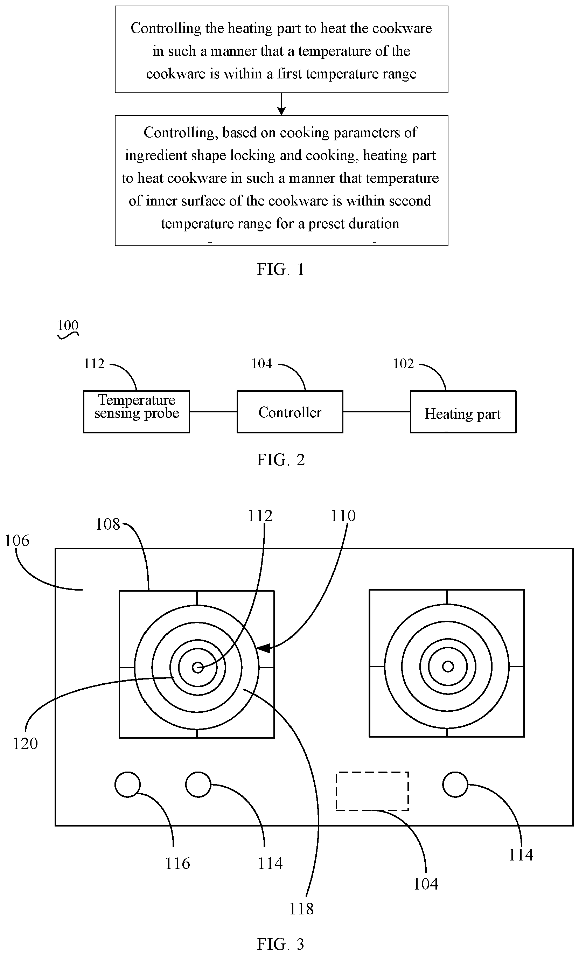

Referring to FIG. 1 and FIG. 2, the present disclosure provides a control method applied in a cooking appliance 100 including a heating part 102 configured to heat cookware, and the method includes: a preheating stage of controlling the heating part 102 to heat the cookware in such a manner that a temperature of the cookware is within a first temperature range; and a shape locking and cooking stage of controlling, based on cooking parameters of ingredient shape locking and cooking, the heating part 102 to heat the cookware in such a manner that a temperature of an inner surface of the cookware is within a second temperature range for a preset time duration.

The control method according to the embodiment of the present disclosure can be implemented by the cooking appliance 100 according to the embodiment of the present disclosure. Particularly, referring to FIG. 2, the cooking appliance 100 includes a heating part 102 and a controller 104, the controller 104 is connected to the heating part 102, and the controller 104 is configured to perform the preheating phase of controlling the heating part 102 to heat the cookware in such a manner that the temperature of the cookware is within the first temperature range, and configured to perform the shape locking and cooking stage of controlling, based on the cooking parameters of ingredient shape locking and cooking, the heating part 102 to heat the cookware in such a manner that the temperature of the inner surface of the cookware is within the second temperature range for the preset time duration.

According to the cooking appliance 100 and the control method of the embodiment of the present disclosure, firstly the temperature of the cookware is within first temperature range, to achieve a purpose of preheating the cookware, then the heating part 102 is controlled to be heated based on the cooking parameters of ingredient shape locking and cooking, so that the shape locking and cooking stage of the food can be synchronously completed during cooking, to achieve the intelligent cooking of the steak-type food.

Particularly, the steak-type food includes, but is not limited to, steak, pork chop, chicken chop, pancake, fried egg, and the like, and in the embodiments of the present disclosure, the embodiments of the present disclosure will be described by taking the steak as an example. The cooking appliance 100 includes, but is not limited to, a gas stove, an induction cooker, an electric ceramic oven, an oven, a toaster, and the like. In the embodiment of the present disclosure, the cooking appliance 100 will be described with reference to a gas stove as an example. Referring to FIG. 3, in the illustrated embodiment, the cooking appliance 100 includes a stove body 106, cookware support 108, two stove heads 110, and a temperature sensing probe 112, the stove body has a fire switch 114 and a timing switch 116 disposed on a surface thereof, the two stove heads 110 may serve as the heating part 102 of the cooking appliance 100, the number of the stove heads 110 is two, and each of the two stove head 110 corresponds to one fire switch 114. The cookware support 108 is disposed on a surface of a panel of the stove body 106, and each of the two stove head 110 is exposed from an opening of the panel of the stove body 106. Each of the two stove head 110 has a temperature sensing probe 112 disposed in a middle portion thereof. Particularly, each of the two stove head 110 includes an outer ring portion 118 and an inner ring portion 120, the gas injected by the outer ring portion 118 combusts to form an outer ring fire, the gas injected by the inner ring portion 120 combusts to form an inner ring fire. The temperature sensing probe 112 penetrates through the inner ring portion 120 and protrudes from the inner ring portion 120. During cooking, the cookware is placed on the cookware support 108 and presses down the temperature sensing probe 112, so that the temperature sensing probe 112 can be in contact with the cookware to detect the temperature of the cookware. The gas injected from the stove head 110 is combusted to form fire to heat the cookware. The fire switch 114 is connected to an execution module of a gas stove (the execution module includes a gas valve) and is configured to control the firing, extinguishing, and fire adjustment of the cooking appliance 100, for example control the outer ring fire and the inner ring fire to heat the cookware at the same time, control fire intensity of the outer ring fire and the inner ring fire, control the outer ring fire to be extinguished and keep the inner ring fire to heat the cookware, and control the outer ring fire and the inner ring fire to be extinguished, and the like. The fire intensity or power may be controlled by controlling flow of the gas, and a relation between the fire intensity or power and the flow of the gas may be calibrated and stored. The timing switch 116 is configured to adjust a time for starting the cooking of the cooking appliance 100, and may adjust a reserved cooking time.

In the case that the cooking appliance 100 is an induction cooker, a heating coil of the induction cooker may serve as the heating part 102. In the case that the cooking appliance 100 is an oven, an electric heating plate or an electric heating pipe of the oven may serve as the heating part 102. As for other cooking appliances 100, the fire intensity or power may be controlled by electrical parameters such as current, voltage. Particularly, the execution module of the cooking appliance 100 may include a power control module configured to control the power of the heating part 102 to achieve the adjustment of the fire.

The temperature of the cookware detected by the temperature sensing probe 112 may also be used for dry burning prevention. Particularly, when the temperature of the cookware suddenly rises to a set flame-out temperature for dry burning of the cookware, the controller 104 may control the gas stove to automatically cut off the gas and extinguish the fire to prevent a safety problem caused by dry burning of the cookware.

It is understood that the temperature of the cookware includes a temperature of the outer surface of the cookware and a temperature of the inner surface of the cookware. In the illustrated embodiment, the temperature sensing probe 112 is a contact type, and since a bottom of the cookware contacts the temperature sensing probe 112, the temperature of the outer surface of the bottom of the cookware may be regarded as the temperature of the cookware. It is understood that in other embodiments, the temperature of the cookware may be detected by other temperature detecting apparatuses, for example a non-contact temperature detecting apparatus including an infrared temperature detecting apparatus, which may be installed on a panel or a wall of the cooking appliance 100 for detecting the temperature of the outer surface or inner surface of the cookware body or the outer surface or inner surface of the bottom of the cookware as the temperature of the cookware. A first temperature range corresponding to the temperature of the outer surface of the cookware serving as the temperature of the cookware is smaller than a first temperature range corresponding to the temperature of the inner surface of the cookware serving as the temperature of the cookware.

In the embodiment of the present disclosure, the temperature of the inner surface of the cookware can be obtained by detecting the temperature of the outer surface of the cookware, to achieve a temperature control for cooking the food. Particularly, a temperature Ti of the outer surface of the cookware may be detected by the temperature sensing probe 112, a compensation difference ΔT of the temperature difference between the inner surface and the outer surface of the cookware may be obtained based on the temperature Ti of the outer surface of the cookware, and then a temperature Tj of the inner surface of the cookware can be determined based on the temperature Ti and the compensation difference ΔT, that is, Ti=Tj+ ΔT, or Tj=Ti- ΔT.

A type of cooker used is usually fixed for a certain cooking process or program. For example, for a process or procedure of frying steak (beef steak), a metal cooker (for example an iron cooker or a stainless steel cooker) is generally used, so in the cooking appliance 100, the difference ΔT corresponding to the metal cooker may be stored in the cooking appliance 100 in advance, or may be obtained from a cloud server by the cooking appliance 100 accessing the internet. In the case that the cooking appliance 100 determines to fry steak in accordance with the cooking program selected by the user, the controller 104 may select the corresponding difference ΔT to calculate the temperature Tj of the inner surface of the cookware in the case of subsequently obtaining the temperature Ti of the outer surface of the cookware. In the case that the difference ΔT is different for different metal cookers, but the difference is not large, the minimum difference in the interval range is usually selected as the difference ΔT of the metal cooker. Of course, in other cases, other differences may be selected as the difference ΔT of such cooker.

In some embodiments, the type of cooker may also be determined from cookware selection signal. Particularly, the control method includes: determining the type of the cookware based on the cookware selection signal; and determining the difference between the temperature of the outer surface of the cookware and the temperature of the inner surface of the cookware based on the type of the cookware.

The control method of the above embodiment may be implemented by the cooking appliance 100 of the present embodiment. Particularly, the controller 104 is configured to determine the type of cooker according to the cookware selection signal, and to determine the difference between the temperature of the outer surface of the cookware and the temperature of the inner surface of the cookware based on the type of cooker.

In this way, the cooking appliance 100 may be adapted to more cookers, and the temperature control is more accurate.

Particularly, the cooking appliance 100 may be provided with a selection key or an interface, after the user selects a certain cooking procedure, the selection key or the interface is used for the user to select a kind of cookware to generate cookware selection signal, the controller 104 determines ΔT upon receiving the cookware selection signal, and then may determine the temperature Tj of the inner surface of the cookware through the ΔT and the detected temperature Ti of the outer surface of the cookware. The type of the cookware includes but is not limited to a marmite, a glass cooker, a metal cooker (for example a stainless steel cooker, an iron cooker or other alloy cookers) and so on. The cookware selection signal may also be transmitted by a terminal that establishes a wired or wireless communication with the cooking appliance 100. The terminal includes, but not limited to a mobile phone, a tablet computer, a personal computer, a wearable smart device, other household appliances (e.g., a refrigerator, a television, an air conditioner, a range hood, a dishwasher, a microwave oven, etc.).

In addition, the cooking device 100 further has a menu button disposed thereon, and the user may select the menu "fry steak" through the menu button. The menu button includes but is not limited to a touch button, a knob, a push button, and the like. Before cooking the steak, a preparation stage is performed. Particularly, the surface of the steak is dried with kitchen towels, appropriate oil is smeared on two surfaces of the steak for standby, and when the user selects "fry steak" through the menu button, and the heating part 102 starts to heat the cookware.

In the preheating stage, the controller 104 controls the heating part 102 to operate at a first preset power until it is detected that the temperature of the cookware is within the first temperature range. The temperature of the cookware includes the temperature of the outer surface of the cookware and the temperature of the inner surface of the cookware. In one example, the first preset power may be a high-grade fire of the cooking appliance 100. The first temperature range is related to a category of the food. For steak, when the temperature of the outer surface of the cookware is taken as the temperature of the cookware, the first temperature range is from 140 °C to 220 °C. That is, in the preheating stage, it needs to be that the temperature T of the cookware is greater than or equal to 140 °C and smaller than or equal to 220 °C. Preferably, the first temperature range is from 150 °C to 210 °C, for example 150 °C, 210 °C, or other values between 150 °C and 210 °C. When the temperature of the inner surface of the cookware is taken as the temperature of the cookware, the first temperature range is from 200°C to 280 °C. That is, in the preheating stage, it needs to be that the temperature T of the cookware is greater than or equal to 200 °C and smaller than or equal to 280 °C. Preferably, the first temperature range is from 210 °C to 270 °C, for example 210 °C, 270 °C, or other values between 210 °C and 270 °C.

In some embodiments, the control method includes the followings. When the temperature of the cookware is within the first temperature range, the cooking appliance 100 is controlled to issue a put-into-cooker indication. Therefore, the user can be indicated to put the food into the cookware in time.

The control method according to the embodiment of the present disclosure may be implemented by the cooking appliance 100 according to the embodiment of the present disclosure. Particularly, the controller 104 is configured to control the cooking appliance 100 to issue the put-into-cooker indication when the temperature of the cookware is within the first temperature range.

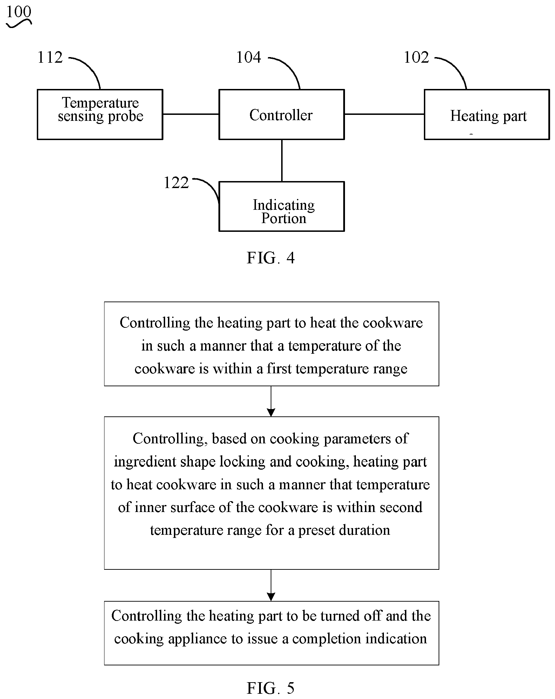

Particularly, referring to FIG. 4, the cooking appliance 100 may include an indicating portion 122, the controller 104 is connected to the indicating portion 122, and the controller 104 may control the indicating portion 122 to issue the put-into-cooker indication when the temperature of the cookware is within the first temperature range. In one example, the indicating portion 122 may include a sound generating apparatus that can include a speaker and a light emitting apparatus that can include a display, an indicator light, and the like. The put-into-cooker indication can be a sound indication sent by the speaker, for example a sound of "put into cooker" or the like, or a visual indication sent out by the light emitting apparatus, for example a character of "put into cooker" or the like on the display, a special color or a combination of colors or a flashing frequency of the indicator light for sending out the put-into-cooker indication, and the like. The put-into-cooker indication may also be transmitted to the terminal by the cooking appliance 100, and the terminal performs a sound and visual indication.

In some embodiments, the control method includes the followings. After the put-into-cooker indication is issued, in response to determining that no food is in the cookware based on the temperature of the cookware, the heating part 102 is controlled to be turned off. In this way, the heating part 102 can be turned off when no food is put into the cookware, and the cookware can be prevented from being burnt dry.

The control method according to the embodiment of the present disclosure may be implemented by the cooking appliance 100 according to the embodiment of the present disclosure. Particularly, the controller 104 is configured to control the heating part 102 to be turned off in response to determining that no food not put into the cookware based on the temperature of the cookware after the put-into-cooker indication is issued.

Particularly, the food is in a normal temperature state before being put into the cookware, and the food may rapidly absorb the heat of the cookware when being put into the cookware, so that the temperature of the cookware is obviously reduced. A temperature reduction characteristic of the cookware when the food is put into the cookware may be calibrated through testing, and the temperature reduction characteristic is stored in the cooking appliance 100 or may be obtained by the cooking appliance 100 from a cloud server. If the user does not put the food into the cookware for a certain time duration after the cooking appliance 100 issues the put-into-cooker indication, which may lead to the temperature of cooker to continue to rise, then a temperature change characteristic of the cookware also does not conform with the calibrated temperature reduction characteristic mentioned above. If the cookware is continued to be heated, it will be dry burned. Therefore, when no food is put into the cookware, if the controller 104 determines that the temperature change characteristic of the cookware does not conform with the temperature reduction characteristic of the cookware when the food is put into the cookware, the controller 104 may turn off the heating part 102 to avoid the dry burning of the cookware. A specific value of the certain time duration may be particularly calibrated through a test simulating an actual use scenario of the cooking appliance 100. The above-mentioned setting of a certain time duration should consider the time period for the user to put the food into the cookware.

In the shape locking and cooking stage, the purpose of controlling the heating of the heating part 102 based on the cooking parameters of ingredient shape locking and cooking is to cook the steak-type food of better quality. Particularly, for the steak, after the steak is put into the cookware, if the temperature of the inner surface of the cookware is lower, the steak may consume an initial temperature of the inner surface of the cookware, at this moment, the temperature of the inner surface of the cookware is not high enough to cause an Maillard reaction of carbohydrates and amino acids in the steak to form a caramelized shell, and the muscle fibers of the steak shrink violently and a large amount of blood can overflow, so that the resulting steak can be deformed, collapsed, has serious lignification during chewing, is dry and tasteless and is difficult to swallow. If the temperature of the inner surface of the cookware is relatively high, the surface of the steak can become dark and black, and an internal doneness and a color layering of the steak are influenced. Through a depth research of the applicant, a correlation relationship between the temperature change trend of the outer surface of the cookware and the temperature change of the inner surface of the cookware is established, the controller 104 automatically adjusts the fire intensity of the heating part 102, so that the surface temperature T of the steak contacted with the inner surface of the cookware is maintained in a temperature range greater than or equal to 155 °C and smaller than or equal to 225 °C for a certain time duration, and the steak can be synchronously shape-locked and cooked.

In the shape locking and cooking stage, the second temperature range is from 155 °C to 225 °C for the steak. That is, in the shape locking and cooking stage, the temperature Tj of the inner surface of the cookware is in a temperature range greater than or equal to 155 °C and smaller than or equal to 225 °C. Preferably, the second temperature range is from 170 °C to 210 °C, for example 170 °C, 210 °C, or other values between 170 °C and 210 °C.

In one example, the preset time duration is selected within a range from 120s to 300s for a steak. For other meats, the preset time duration may be determined through testing and stored in cooking appliance 100 or may be obtained by the cooking appliance 100 from a cloud server.

In some embodiments, the cookware includes a single heating surface, and the control method includes the followings. The heating part is controlled to heat the single heating surface in the shape locking and cooking stage. Therefore, when the cooking steak-type food is cooked by using the cookware with the single heating surface, the shape locking and cooking stage of the steak-type food can be synchronously completed during cooking, and only one-time auxiliary turning-over is needed.

The control method according to the embodiment of the present disclosure may be implemented by the cooking appliance 100 according to the embodiment of the present disclosure. Particularly, the controller 104 is configured to control the heating part to heat the single heating surface in the shape locking and cooking stage.

In some embodiments, the shape locking and cooking stage includes a first-surface shape locking and cooking stage and a second-surface shape locking and cooking stage, and the control method includes the followings.

The cooking appliance 100 is controlled to issue a turn-over indication after the first-surface shape locking and cooking stage is completed and before the second-surface shape locking and cooking stage is executed. Therefore, the cooking of the two sides of the steak-type food is achieved through two shape locking and cooking stages.

The control method according to the embodiment of the present disclosure may be implemented by the cooking appliance 100 according to the embodiment of the present disclosure. Particularly, the controller 104 is configured to control the cooking appliance 100 to issue a turn-over indication after the first-surface shape locking and cooking stage is completed and before the second-surface shape locking and cooking stage is executed.

Particularly, the embodiment is suitable for a condition that the cookware only has one heating surface during cooking. When steak is fried, one side of the steak is usually placed on a heating surface in the cookware. At this time, the first-surface shape locking and cooking stage is executed. After the first-surface shape locking and cooking stage is completed, the cooking appliance 100 is controlled to issue the turn-over indication to indicate the user to perform a turn-over operation. And after the user turns over the food, the cooking of the second-surface shape locking and cooking stage is executed on the other surface of the steak. It is understood that cooking parameters of the first-surface shape locking and cooking stage may be the same with or different from cooking parameters of the second-surface shape locking and cooking stage. For example, within the second temperature range, the temperature selected for the first-surface shape locking and cooking stage may be the same with or different from the temperature selected for the second-surface shape locking and cooking stage. The preset time duration of the first-surface shape locking and cooking stage may be the same with or different from the preset time duration of the second-surface shape locking and cooking stage. This may be determined based on a default setting or a user setting of the cooking appliance 100.

The turn-over indication may be issued by the indicating portion 122controlled by the controller 104 when the preset time duration of the first-surface shape locking and cooking stage ends. The turn-over indication may be a sound indication emitted by a speaker, for example a sound of "turn-over" or the like, or a visual indication emitted by a light emitting apparatus, for example a display of "turn-over" character or the like, an indicator light emitting a turn-over indication in a specific color or a combination of colors or a flashing frequency, or the like. The turn-over indication may also be transmitted to the terminal by the cooking appliance 100, and the terminal performs a sound and visual indication.

In some embodiments, a control method includes the followings.

After the turn-over indication is issued, in response to determining that the food in the cookware is not turned over based on the temperature of the cookware, the heating part is controlled to be turned off. Therefore, one side of the food can be prevented from being burnt out.

The control method according to the embodiment of the present disclosure may be implemented by the cooking appliance 100 according to the embodiment of the present disclosure. Specifically, after the turn-over indication is issued, the controller 104 is configured to control the heating part 102 to be turned off in response to determining that the food in the cookware is not turned over based on the temperature of the cookware.

Particularly, as the food is subjected to the first-surface shape locking and cooking stage, the temperature of the food is higher than a normal temperature, if the food is turned over, the heat of the cookware is absorbed, so that the temperature of the cookware is reduced, but the temperature reduction characteristic of the cookware is different from that of the cookware when food is put into the cookware, and similarly, the temperature reduction characteristic of the cookware when the food is turned over may be calibrated through testing and stored in the cooking appliance 100 or may be obtained by the cooking appliance 100 from the cloud server. If the user does not turn the food over within a certain time duration after the cooking appliance 100 issues the turn-over indication, the temperature of the cookware is continuously increased, the temperature change characteristic of the cookware does not conform with the calibrated temperature reduction characteristic when turning over, and the food cooking effect is influenced if the food is continuously heated. Therefore, when the food is not turned over, the controller 104 determines that the temperature change characteristic of the cookware does not conform with the temperature reduction characteristic of the cookware when the food is turned over, and turns off the heating part 102 to avoid affecting the cooking effect of one side of the food. The specific value of the certain time duration may be particularly calibrated through a test simulating an actual use scenario of the cooking appliance 100. The above-mentioned setting of the certain time duration should consider a time duration that the user turns over the food.

In some embodiments, the control method includes the followings. At least one of a thickness and a doneness of the food is acquired; and the cooking parameters of ingredient shape locking and cooking are determined based on at least one of the thickness and the doneness of the food. Therefore, the cooking can be executed based on at least one of the thickness and the doneness of the food, and more cooking requirements of the user can be met.

The control method according to the embodiment of the present disclosure may be implemented by the cooking appliance 100 according to the embodiment of the present disclosure. Particularly, the controller 104 is configured to acquire at least one of the thickness and the doneness of the food, and to determine the cooking parameters of ingredient shape locking and cooking based on the at least one of the thickness and the doneness of the food.

Particularly, in the embodiment of the present disclosure, the thickness and the doneness of the steak selected by the user will be described. The cooking appliance 100 may have a selection button or interface disposed thereon, for the user to select the thickness and the doneness of the steak after the user selects a certain cooking program, and the controller 104 determines the cooking parameters of ingredient shape locking and cooking of the steak upon receiving the thickness and the doneness of the steak. The thickness and the doneness of the steak may also be transmitted by a terminal in communication with cooking appliance 100. Referring to the table below, as an example, the table gives the thickness and the doneness of the steak in relation to the preset time duration t.

| Thickness of the steak/cm | Doneness-medi um rare | Doneness-medi um | Doneness-medi um well | Doneness-well done |
|---|---|---|---|---|
| 1 | 9s≤t≤35s | 13s≤t≤55s | 36s≤t≤105s | 58s≤t≤185s |
| 1.5 | 45s≤t≤125s | 58s≤t≤184s | 78s≤t≤245s | 98s≤t≤305s |
| 2 | 58s≤t≤156s | 58s≤t≤205s | 118s≤t≤310s | 146s≤t≤310s |
| 3 | 115s≤t≤245s | 128s≤t≤305s | 175s≤t≤365s | 198s≤t≤505s |

In addition, in the case that the user does not select the thickness and the doneness of the steak, the steak cooked by the cooking appliance 100 is considered to be a medium well steak having a thickness of 2cm, and the cooking time duration of each side of the steak is greater than or equal to 120 s and smaller than or equal to 300 s.

It will be appreciated that in other embodiments, the user may select the thickness or the doneness of the steak. The cooking appliance 100 may also calibrate the temperature of the cookware in which the steak is cooked based on the thickness and the doneness of the steak. The present disclosure is not limited herein.

In some embodiments, referring to FIG. 5, the control method includes the followings. When the shape locking and cooking stage is completed, the heating part 102 is controlled to be turned off and the cooking appliance 100 is controlled to issue a completion indication. Therefore, the user can be informed of the completion of cooking in time, so that the user can conveniently perform subsequent processing.

The control method according to the embodiment of the present disclosure may be implemented by the cooking appliance 100 according to the embodiment of the present disclosure. Particularly, the controller 104 is configured to control the heating part 102 to be turned off and control the cooking appliance 100 to issue the completion indication when the shape locking and cooking stage is completed.

Particularly, the completion indication may be issued by the indication portion 122 controlled by the controller 104 in the case when the preset time duration of the shape locking and cooking stage ends. The completion indication may be a sound indication issued by a speaker, for example a sound of "remove-from-cooker" or the like, or a visual indication emitted by a light emitting apparatus, for example a character of "remove-from-cooker" or the like displayed by a display, a completion indication emitted by an indicator light in a specific color or a combination of colors or a flashing frequency, or the like. The completion indication may also be transmitted to the terminal by the cooking appliance 100, and the terminal performs a sound and visual indication.

It should be noted that the specific numerical values mentioned above are only for illustrating the implementation of the present disclosure in detail by way of example and should not be construed as limiting the present disclosure. In other examples or embodiments or examples, other values may be selected according to the present disclosure and are not particularly limited herein.

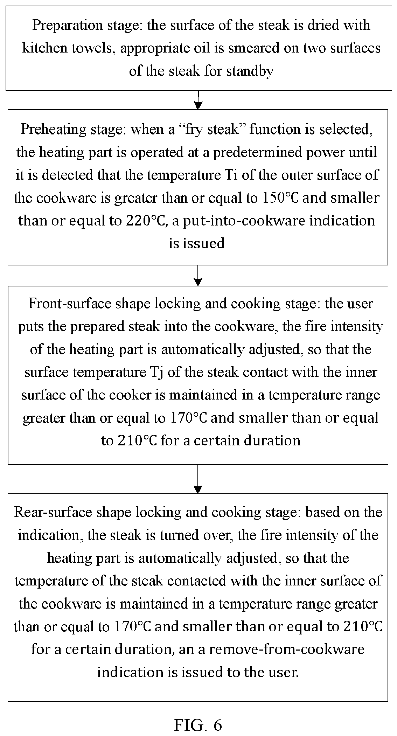

Referring to FIG. 6, FIG. 6 shows an embodiment of the present disclosure.

An embodiment of the present disclosure further provides a computer-readable storage medium having a computer program stored thereon. In which the computer program, when executed by a processor, implements steps of the control method of any one of the above embodiments.

For example, in the case that the program is executed by the processor, the control method is implemented. The control method includes: a preheating stage of controlling the heating part 102 to heat the cookware in such a manner that a temperature of the cookware is within a first temperature range; and a shape locking and cooking stage of controlling, based on cooking parameters of ingredient shape locking and cooking, the heating part 102 to heat the cookware in such a manner that a temperature of an inner surface of the cookware is within a second temperature range for a preset time duration.

According to the computer-readable storage medium of the embodiment of the present disclosure, firstly the temperature of the cookware is within first temperature range, to achieve a purpose of preheating the cookware, then the heating part 102 is controlled to be heated based on the cooking parameters of ingredient shape locking and cooking, so that the shape locking and cooking stage of the food can be synchronously completed during cooking, to achieve the intelligent cooking of the steak-type food.

The computer-readable storage medium may be disposed in the cooking appliance 100, or may be disposed in a cloud server, and the cooking appliance 100 may communicate with the cloud server to obtain the corresponding program.

It will be appreciated that the computer program includes computer program code. The computer program code may be in the form of source code, object code, an executable file or some intermediate form, and the like. The computer-readable storage medium may include: any entity or apparatus capable of carrying computer program code, recording medium, U disk, removable hard disk, magnetic diskette, optical disk, computer memory, Read-Only Memory (ROM), Random Access Memory (RAM), and software distribution medium.

The controller 104 of the cooking appliance 100 is a single chip integrated with a processor, a memory, a communication module, and the like. The processor may refer to a processor included in the controller 104. The Processor may be a Central Processing Unit (CPU), other general purpose processor, a Digital Signal Processor (DSP), an Application Specific Integrated Circuit (ASIC), a Field-Programmable Gate Array (FPGA) or other programmable logic device, discrete gate or transistor logic, discrete hardware components, etc.

In the description of the present specification, reference to the description of "one embodiment", "some embodiments", "illustrative embodiments", "examples", "specific examples" or "some examples" or the like means that a particular feature, structure, material, or characteristic described in connection with the embodiment or example is included in at least one embodiment or example of the present disclosure. In this specification, schematic representations of the above terms do not necessarily refer to the same embodiment or example. Furthermore, the particular features, structures, materials, or characteristics described may be combined in any suitable manner in any one or more embodiments or examples.

Any process or method descriptions in flow charts or otherwise described herein may be understood as representing modules, segments, or portions of code which include one or more executable instructions for implementing specific logical functions or steps in the process, and alternate implementations are included within the scope of the preferred embodiment of the present disclosure in which functions may be executed out of order from that shown or discussed, including substantially concurrently or in reverse order, depending on the functionality involved, which should be understood by those of skills in the art to which the embodiments of the present disclosure belong.

The logic and/or steps represented in the flow charts or otherwise described herein, for example an ordered listing of executable instructions that can be considered to implement logical functions, can be embodied in any computer-readable medium for use by or in connection with an instruction execution system, apparatus, or device, such as a computer-based system, processing module-containing system, or other system that can fetch the instructions from the instruction execution system, apparatus, or device and execute the instructions. For the purposes of this specification, a "computer-readable medium" can be any means that can contain, store, communicate, propagate, or transport the program for use by or in connection with the instruction execution system, apparatus, or device. More specific examples (a non-exhaustive list) of the computer-readable medium would include the following: an electrical connection part (electronic device) having one or more wires, a portable computer diskette (magnetic device), a Random Access Memory (RAM), a Read-Only Memory (ROM), an Erasable Programmable Read-only Memory (EPROM or flash memory), an optical fiber device, and a portable Compact Disc Read-Only Memory (CDROM). Further, the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

It should be understood that portions of the embodiments of the present disclosure may be implemented in hardware, software, firmware, or a combination thereof. In the above embodiments, various steps or methods may be implemented in software or firmware stored in a memory and executed by a suitable instruction execution system. For example, if implemented in hardware, as in another embodiment, any one or combination of the following technologies, which are well known in the art, may be used: a discrete logic circuit having a logic gate circuit for implementing a logic function on a data signal, an application specific integrated circuit having an appropriate combinational logic gate circuit, a Programmable Gate Array (PGA), a Field Programmable Gate Array (FPGA), or the like.

It will be understood by those of skills in the art that all or part of the steps carried out in the method of implementing the above embodiments may be implemented by hardware related to instructions of a program, which may be stored in a computer readable storage medium, and the program, when executed, includes one or a combination of the steps of the method embodiments.

In addition, functional units in the embodiments of the present disclosure may be integrated into one processing module, or each unit may exist alone physically, or two or more units are integrated into one module. The integrated module can be achieved in a hardware mode, and can also be achieved in a software functional module mode. The integrated module, if implemented in the form of a software functional module and sold or used as a separate product, may also be stored in a computer-readable storage medium.

The storage medium mentioned above may be a read-only memory, a magnetic or optical disk, etc.

Although embodiments of the present disclosure have been shown and described above, it is understood that the above embodiments are exemplary and should not be construed as limiting the present disclosure and that variations, modifications, substitutions and alterations in the above embodiments may be made by those of ordinary skills in the art within the scope of the present disclosure.

## Claims

1. A control method, applied in a cooking appliance comprising a heating part configured to heat cookware, the control method comprising:
a preheating stage of controlling the heating part to heat the cookware in such a manner that a temperature of the cookware is within a first temperature range; and
a shape locking and cooking stage of controlling, based on cooking parameters of ingredient shape locking and cooking, the heating part to heat the cookware in such a manner that a temperature of an inner surface of the cookware is within a second temperature range for a preset time duration.

2. The control method according to claim 1, comprising:
controlling, when the temperature of the cookware is within the first temperature range, the cooking appliance to issue a put-into-cooker indication.

3. The control method according to claim 2, comprising:
after the put-into-cooker indication is issued, controlling, in accordance with a determination that no food is in the cookware based on the temperature of the cookware, the heating part to be turned off.

4. The control method according to claim 1, wherein the cookware comprises a single heating surface, and the control method comprises:
controlling the heating part to heat the single heating surface in the shape locking and cooking stage.

5. The control method according to claim 4, wherein the shape locking and cooking stage comprises a first-surface shape locking and cooking stage and a second-surface shape locking and cooking stage, wherein the control method further comprises:
controlling the cooking appliance to issue a turn-over indication after the first-surface shape locking and cooking stage is completed and before the second-surface shape locking and cooking stage is executed.

6. The control method according to claim 5, comprising:
after the turn-over indication is issued, controlling, in response to determining that the food in the cookware is not turned over based on the temperature of the cookware, the heating part to be turned off.

7. The control method according to claim 1, comprising:
acquiring at least one of a thickness and a doneness of the food; and
determining the cooking parameters of ingredient shape locking and cooking based on at least one of the thickness and the doneness of the food.

8. The control method according to claim 1, comprising:
when the shape locking and cooking stage is completed, controlling the heating part to be turned off and controlling the cooking appliance to issue a completion indication.

9. A cooking appliance, comprising:
a controller; and
a heating part configured to heat cookware,
wherein the controller is connected to the heating part and configured to implement steps of the control method according to any one of claims 1 to 8.

10. A computer-readable storage medium, having a computer program stored thereon, wherein the computer program, when executed by a processor, implements steps of the control method according to any one of claims 1 to 8.
